(19) Europäisches Patentamt
European Patent Office
Office européen des brevets

(11) **EP 4 211 780 B1**

(12) **EUROPÄISCHE PATENTSCHRIFT**

(45) Veröffentlichungstag und Bekanntmachung des Hinweises auf die Patenterteilung:
**06.05.2026  Patentblatt 2026/19**

(21) Anmeldenummer: **21754738.9**

(22) Anmeldetag: **22.07.2021**

(51) Internationale Patentklassifikation (IPC):
**H02K 7/102** (2006.01)     **H02K 7/116** (2006.01)

(52) Gemeinsame Patentklassifikation (CPC):
**H02K 7/1023; H02K 7/116**

(86) Internationale Anmeldenummer:
**PCT/EP2021/070574**

(87) Internationale Veröffentlichungsnummer:
**WO 2022/053215 (17.03.2022 Gazette 2022/11)**

(54) **STELLANTRIEB MIT EINEM ELEKTROMOTOR UND EINEM AN DESSEN ROTOR BEWEGLICH ANGEORDNETEN ELEKTROMAGNETEN ZUR AUFBRINGUNG EINES KONTAKTBEHAFTETEN HALTEMOMENTS ÜBER EIN REMANENZMAGNETFELD**

SERVO DRIVE HAVING AN ELECTRIC MOTOR AND AN ELECTROMAGNET ARRANGED MOVABLY ON THE ROTOR OF THE ELECTRIC MOTOR TO APPLY A HOLDING TORQUE WITH CONTACT VIA A REMANENT MAGNETIC FIELD

SERVOCOMMANDE COMPORTANT UN MOTEUR ÉLECTRIQUE ET UN ÉLECTROAIMANT DISPOSÉ MOBILE SUR LE ROTOR DU MOTEUR ÉLECTRIQUE POUR APPLIQUER UN COUPLE DE MAINTIEN AVEC CONTACT PAR L'INTERMÉDIAIRE D'UN CHAMP MAGNÉTIQUE RÉMANENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.09.2020  DE 102020211409**

(43) Veröffentlichungstag der Anmeldung:
**19.07.2023  Patentblatt 2023/29**

(73) Patentinhaber: **Siemens Schweiz AG
8047 Zürich (CH)**

(72) Erfinder: **HUBER, Wolfgang
6333 Hünenberg See (CH)**

(74) Vertreter: **Siemens Patent Attorneys
Postfach 22 16 34
80506 München (DE)**

(56) Entgegenhaltungen:
**EP-A1- 1 258 969        EP-A1- 1 655 259
EP-A2- 1 642 858        DE-A1- 1 538 927
DE-A1- 102018 210 167    DE-A1- 19 832 694
DE-B- 1 290 244         US-A- 3 423 661
US-A1- 2020 224 742     US-B1- 10 454 341**

## EP 4 211 780 B1

**Beschreibung**

Die Erfindung betrifft einen Stellantrieb für eine Klappe oder für ein Ventil zum Einstellen eines gasförmigen oder flüssigen Volumenstroms, insbesondere für HLK-Anwendungen für Heizung, Lüftung oder Kühlung. Der Stellantrieb weist ein Gehäuse und darin aufgenommen einen Elektromotor, ein nachgeschaltetes Getriebe, insbesondere Reduziergetriebe, und als Abtrieb ein Stellelement mit einem Stellanschluss für die Klappe oder für das Ventil auf. Zudem umfasst der Elektromotor einen Stator sowie einen zu einer Drehachse des Elektromotors umlaufenden Rotor. Der Rotor ist insbesondere magnetisch ausgeführt. Mit "magnetisch" ist hier gemeint, dass testweise ein Permanentmagnet am Rotor des Elektromagneten haften bleiben würde.

Aus der EP 1 258 969 A1 ist eine Antriebsvorrichtung zur Betätigung eines Stellglieds bekannt, die einen Elektromotor, eine Rückstellfeder und eine Fliehkraftbremse aufweist. Das Stellglied ist in einer ersten Bewegungsrichtung durch den von einer Steuer- oder Regeleinrichtung aktivierten Elektromotor und in einer zweiten Bewegungsrichtung durch die Rückstellfeder betätigbar. Ein Bremskörper der Fliehkraftbremse ist direkt am Läufer des Elektromotors angeordnet. Die Fliehkraftbremse ist derart auslegbar, dass eine Bremswirkung nur dann erzeugt wird, wenn der Stellantrieb durch die Rückstellfeder angetrieben wird. Durch die Fliehkraftbremse werden die erreichbaren Drehzahlen so weit begrenzt, dass keine störenden Schwingungen und Geräusche auftreten.

Aus der US 3 423 661 A ist ein elektromotorisch angetriebenes Stellglied für ein Ventil bekannt, das eine auf Drehmoment ansprechende und Trägheitsenergie absorbierende Überlaststeuerung enthält, die einen Überlastzustand des Ventils erfasst und den elektrischen Antriebsmotor sofort abschaltet und eine Bremse anlegt. Die Energieabsorption der Vorrichtung bei Drehmomentüberlastung wird durch ein Getriebe bewirkt, das den elektrischen Antriebsmotor und die angetriebene Welle der Vorrichtung miteinander verbindet. Dieses Getriebe enthält ein Drehmomentüberlastungsreaktionselement, das im Falle einer Drehmomentüberlastung gegen eine Federvorspannung beweglich ist, um einen Schalter zu betätigen und dadurch den Motor stromlos zu machen und die Bremse anzuziehen.

Aus der EP 1 655 259 A1 ist eine Aufzugshebevorrichtung bekannt, die aufweist ein stationäres Rahmenelement, eine Hauptwelle, ein an dem stationären Rahmenelement angeordnetes stationäres Element, ein drehbares Rahmenelement, das auf der Hauptwelle gelagert ist und sich in einer radialen Richtung gegenüber dem stationären Rahmenelement erstreckt, ein Drehelement, das an dem drehbaren Rahmenelement gegenüber dem stationären Element angeordnet ist, eine Bremseinheit mit einem Bremsabschnitt, der sich durch eine Öffnung in dem stationären Rahmenelement erstreckt, und eine Seilscheibe, die an dem drehbaren Rahmenelement zur Drehung damit angeordnet ist.

Aus der EP 1 642 858 A2 ist ein Aufzugtraktor mit einem in einer Tragstruktur befestigten inneren Stator, mit einem übergestülpten äußeren Rotor und mit einer rotierenden Treibscheibe bekannt, die mit dem äußeren Rotor verbunden und an diesem befestigt ist. Der Aufzugtraktor umfasst weiter ein Bremsgetriebe, das mit der Bremsscheibe koordiniert ist, und einen Encoder, der die Geschwindigkeit und die relative Position der Magnetfelder von Stator und Rotor messen kann.

Aus der DE 15 38 927 Al ist ein Elektromotor mit einer Bremseinrichtung bekannt, bei dem der Läufer des Elektromotors als Außenläufer ausgebildet ist und gleichzeitig als Bremstrommel dient. Der Außenläufer ist im Bereich des angreifenden Brembelags mit einer Aluminiumschicht oder von einem Ring aus Material mit guten Reibeigenschaften umgeben.

Aus der US 2020/0224742 Al ist eine Rotationskupplungsvorrichtung mit einem Anker bekannt, der so konfiguriert ist, dass er an eine Welle gekoppelt werden kann, um sich mit der Welle um eine Achse zu drehen, aber relativ zur Welle axial beweglich ist. Eine Elektromagnetanordnung ist auf einer Seite des Ankers angeordnet und gegen Drehung fixiert. Auf der gegenüberliegenden Seite des Ankers ist ein Kragen angeordnet, der so gestaltet, dass er sich mit der Welle dreht, aber gegen eine axiale Bewegung relativ zur Welle fixiert ist und zudem einen Permanentmagneten aufweist. Wenn ein Strom mit einer ersten Polarität an die Elektromagnetanordnung angelegt wird, bewegt sich der Anker in eine axiale Richtung in Eingriff mit einem Element der Kupplungsvorrichtung, um ein Drehmoment zwischen dem Element und dem Anker zu übertragen. Der Permanentmagnet drückt den Anker in die entgegengesetzte axiale Richtung, um den Anker von dem Element zu lösen, wenn der Elektromagnetanordnung kein Strom zugeführt wird.

Aus der US 10 454 341 B1 ist ein System mit einer drehbaren Scheibe mit einer Vielzahl von ferromagnetischen Elementen bekannt, die in einer radialen Anordnung auf einer Oberfläche der Scheibe angeordnet sind. Das System umfasst mindestens einen zur Scheibe angrenzend angeordneten Elektro-Permanentmagneten (EPM) auf, so dass ein Spalt die Scheibe vom jeweiligen EPM trennt. Das Anlegen eines elektrischen Impulses an den EPM ändert dessen magnetischen Zustand, wodurch ein externes Magnetfeld erzeugt wird, das den Spalt zwischen der Scheibe und dem EPM durchquert und mit einem ferromagnetischen Element aus der Vielzahl der ferromagnetischen Elementen interagiert und eine Änderung der Rotationsgeschwindigkeit der Scheibe ändert, wenn sich die Scheibe dreht.

Aus der DE 198 32 694 A1 ist eine Bremseinrichtung nach Art einer Polreibungsbremse zur Abbremsung von entlang eines Linearweges verfahrbaren Gegenstandes bekannt. Sie umfasst eine bewegliche Einheit mit einem Innenpol, einem Außenpol und einer Spule und sieht darüber hinaus einen senkrecht zum Linearweg feststehenden Anker vor, der mit einer Außenpolfläche und mit einer Innenpolfläche wahlweise in reibschlüssigen Kontakt bringbar ist. Über eine Federeinrichtung ist der verfahrbare Gegenstand mit der beweglichen Einheit gekoppelt.

Aus der DE 1 290 244 B ist eine elektromagnetische Bremse für Elektromotoren mit Außenstator bekannt, bei der ein mit einem beweglichen Anker eines Elektromagneten fest verbundener Bremsschuh bei stromlosem Motor durch Federkraft gegen einen auf der Motorwelle befestigten Bremskranz drückt und bei eingeschaltetem Motor durch magnetische Kraft entgegen der Federkraft wieder abgehoben wird.

Aus der DE 10 2018 210 167 A1 ist eine Antriebsvorrichtung für den Antrieb bewegbarer Bauteile eines Kraftfahrzeugs bekannt, aufweisend einen Elektroflachmotor mit einem Stator und einem um eine Rotationsachse rotierbar gelagerten Scheibenläufer. Die Antriebsvorrichtung weist eine zum Feststellen des Scheibenläufers ausgebildete Feststellvorrichtung auf. Die Feststellvorrichtung umfasst ein zwischen einer Halteposition und einer Freigabeposition bewegbar gelagertes Feststellelement, eine betätigbare Aktuatorvorrichtung mit einem bewegbar gelagerten Aktuatorelement zum Bewegen des Feststellelements von der Halteposition in die Freigabeposition und eine Rückstellvorrichtung zum Zurückstellen des Feststellelements von der Freigabeposition in die Halteposition. In der Halteposition steht das Feststellelement mit einem Feststellabschnitt des Scheibenläufers mechanisch im Eingriff.

Bei derartigen Stellantrieben wird die Klappe oder das Ventil durch das Stellelement des Stellantriebs um eine Stellachse bewegt oder sogar zumindest teilweise durch dieses direkt gebildet. Der Stellantrieb ist oftmals dazu eingerichtet, das Stellelement von einer ersten Stellposition in eine zweite Stellposition zu bewegen. Beide Stellpositionen können üblicherweise Endanschläge bilden. Eine erste Stellposition kann darüber hinaus als Startposition oder Ruheposition bezeichnet werden, in welche der Stellantrieb das Stellelement im stromlosen Zustand des Antriebselements, d.h. des Elektromotors, insbesondere mittels einer vorgespannten Rückstellfeder, wieder zurückstellt. Derartige Stellantriebe werden auch als fehlersichere oder Fail-Safe-Stellantriebe bezeichnet. Die zweite Stellposition kann als Betätigungsposition oder Endposition bezeichnet werden. Der Stellanschluss kann innerhalb eines vorgegebenen Drehwinkelbereichs zwischen einer Ruhestellung (Startposition) und einer Betätigungsstellung (Endposition) um seine Stellachse drehbar angeordnet sein. Der maximale Stellwinkelbereich zwischen diesen beiden Drehstellungen liegt vorzugsweise bei 90° ± 10°.

Im Falle von nicht-fehlersicheren Stellantriebe sind häufig Elektromotoren mit erhöhtem Selbsthaltemoment erforderlich, damit der Stellantrieb nicht über das anliegende Drehmoment der Last, d.h. der Klappe oder des Ventils, "weiterläuft". Die hierfür vorgesehenen Elektromotoren weisen dazu typischerweise einen Rotor mit einem Rastmomentrad auf.

Die betrachteten Stellantriebe können alternativ auch lineare Stellantriebe sein, die eine lineare Stellbewegung des Stellelements entlang einer Stellachse am Stellanschluss bewirken, um z.B. ein Ventil öffnend, teilweise öffnend oder schließend anzusteuern. Solche Stellantriebe können sowohl fehlersicher als auch nicht-fehlersicher ausgeführt sein.

Um einen fehlersicheren Stellantrieb in der Betätigungsstellung zu halten, ist es am einfachsten, den Elektromotor über einen dauerhaft anliegenden Haltestrom (Mindeststrom) in der Betätigungsstellung zu halten. Erst wenn die Stromversorgung und somit der Haltestrom weg- oder ausfällt, läuft die Feder zu, und der Stellantrieb verfährt das Stellelement in die sichere Ruhestellung.

Bei einer weiteren bekannte Lösung greift ein Hubmagnet in das Reduziergetriebe des Stellantriebs ein, um ein selbsttätiges Verfahren des Stellelements in die sichere Ruhestellung zu verhindern. Bei Weg- oder Ausfall der Stromversorgung löst sich der Hubmagnet vom Getriebe. Das Getriebe läuft nun frei, sodass der Stellantrieb das Stellelement wieder in die sichere Ruhestellung verfahren kann.

Beide zuvor genannten Lösungen haben in der Betätigungsstellung einen recht hohen Stromverbrauch. So beträgt die Einschaltdauer bei sicherheitsrelevanten Brandschutzklappen faktisch 100 % (ED 100 %).

Es ist daher eine Aufgabe der vorliegenden Erfindung, die voranstehend beschriebenen Nachteile bei Stellantrieben zumindest teilweise zu beheben.

Es ist eine weitere Aufgabe der Erfindung, einen flexibler einsetzbaren Stellantrieb anzugeben.

Schließlich ist es eine Aufgabe einen fehlersicheren Stellantrieb anzugeben, der eine geringere elektrische Leistung (Stromverbrauch) benötigt.

Die Aufgabe der Erfindung wird durch die Merkmale des Hauptanspruchs gelöst. Vorteile und Ausgestaltungen der Erfindung, die einzeln oder in Kombination miteinander einsetzbar sind, sind Gegenstand der abhängigen Ansprüche.

Erfindungsgemäß ist der Rotor ein koaxial zur Drehachse des Elektromotors außenliegender Rotor. Der Stellantrieb weist einen angrenzend zu einer Außenseite des Rotors angeordneten Elektromagneten auf. Der Elektromotor ist somit nicht Bestandteil des Rotors selbst. Der Elektromagnet umfasst eine Spulenanordnung mit einem magnetischen Spulenkern. Der Stellantrieb weist eine elektrische Schaltungsanordnung zur Ansteuerung des Elektromagneten auf. Es ist mittels der Schaltungsanordnung ein erster, vorzugsweise kurzzeitiger Stromimpuls in die Spulenanordnung einprägbar, sodass nachfolgend ein Remanenzmagnetfeld im Spulenkern verbleibt, um in einer Halteposition des Stellantriebs unter Aufbau einer mechanischen Vorspannung ein kontaktbehaftetes Haltemoment auf die Außenseite des Rotors des Elektromotors aufzubringen. Es ist mittels der Schaltungsanordnung ein zweiter, vorzugsweise kurzzeitiger Stromimpuls in die Spulenanordnung einprägbar, um nachfolgend das im Spulenkern noch vorhandene Remanenzmagnetfeld zum Lösen des kontaktbehaftetes Haltemoments unter Ausbildung eines Luftspalts zwischen dem Elektromagneten und der Außenseite des Rotors des Elektromotors im Wesentlichen zu löschen.

Der Elektromagnet ist derart beweglich angrenzend zur Außenseite des Rotors angeordnet, dass der Elektromagnet unter Aufbau der mechanischen Vorspannung in der Halteposition zur Aufbringung des Haltemoments an der Rotoraußenseite anliegt.

Es ist der erste kurzzeitige Stromimpuls derart in die Spulenanordnung einprägbar, dass der Elektromagnet den Luftspalt mittels magnetischer Kraft hin zur Halteposition schließt und durch das im Spulenkern verbleibende Remanenzmagnetfeld unter Aufbringung des Haltemoments an der Rotoraußenseite magnetisch haften bleibt.

Es ist der zweite kurzzeitige Stromimpuls derart in die Spulenanordnung einprägbar ist, dass das im Spulenkern noch vorhandene Remanenzmagnetfeld im Wesentlichen gelöscht wird, wobei sich der Elektromagnet selbsttätig unter Ausbildung des Luftspalts weg von der Rotoraußenseite hin zur Freilaufposition bewegt und dort verbleibt.

Die Spulenanordnung kann eine (einzige) um den magnetischen Spulenkern gewickelte Spule bzw. Wicklung aufweisen, wobei die Spule bzw. Wicklung dann mittels eines Erregerstroms mit positivem und negativem Vorzeichen bestromt werden kann. Die Spulenanordnung kann alternativ auch zwei um den magnetischen Spulenkern gewickelte Spulen bzw. Wicklungen aufweisen, die separat mit einem Erregerstrom bestromt werden können.

Der magnetische Spulenkern bzw. Magnetkern kann ein weichmagnetischer oder hartmagnetischer Spulenkern sein.

Mit "weichmagnetisch" ist gemeint, dass die für den Spulenkern in Frage kommenden weichmagnetischen Werkstoffe, wie Eisen-, Kobalt-, Nickellegierungen oder Ferrite, sich in einem Magnetfeld leicht magnetisieren lassen. Diese magnetische Polarisation kann z.B. durch einen elektrischen Strom in einer stromdurchflossenen Spule um den Spulenkern oder durch Anwesenheit eines Permanentmagneten erzeugt werden. Die Polarisation führt in allen weichmagnetischen Werkstoffen zu einer vielfach höheren magnetischen Flussdichte, als sie das von außen wirkende magnetische Feld in Luft erzeugt. Die weichmagnetischen Werkstoffe für den Spulenkern besitzen insbesondere eine Koerzitivfeldstärke von weniger als 1000 A/m.

Mit "hartmagnetisch" ist gemeint, dass die für den Spulenkern in Frage kommenden hartmagnetischen Werkstoffe sehr hohe Koerzitivfeldstärken $H_C$ besitzen und äußeren Magnetfeldern dementsprechend einen hohen Widerstand entgegensetzen. Eine Ummagnetisierung (bzw. Entmagnetisierung) wird nur über die Einwirkung sehr starker äußerer Magnetfelder erreicht. Für den Betrieb in einem erfindungsgemäßen Stellantrieb sind die betrachteten Elektromagneten vorteilhaft äußerst widerstandsfähig und robust. Hartmagnetische Werkstoffe sind z.B. Legierungen aus AlNiCo (für Aluminium, Nickel und Kobalt), aus CuNiFe (für Kupfer, Nickel und Eisen), aus CuNiCo (für Kupfer, Nickel und Kobalt), aus FeCoCr (für Eisen, Kobalt und Chrom), aus MnAlC (für Mangan, Aluminium und Kohlenstoff) oder PtCo (für Platin und Kobalt). Die hartmagnetischen Werkstoffe können Hartferrite oder auch martensitische Stähle sein. Die hartmagnetischen Werkstoffe für den Spulenkern besitzen eine Koerzitivfeldstärke von mindestens 1000 A/m, insbesondere von mindestens 5000 A/m.

Mit im "Wesentlichen gelöscht" bzw. kompensiert ist gemeint, dass das restliche, sich am Elektromagneten ausbildende Magnetfeld (Remanenzmagnetfeld) einen (maximalen) Flussdichtewert aufweist, der kleiner ist als 20 %, insbesondere kleiner als 10 %, vorzugsweise kleiner als 5%, im Vergleich zum (maximalen) Flussdichtwert des Remanenzmagnetfelds. Unter magnetischer Remanenz bzw. Restmagnetismus versteht man hier diejenige Magnetisierung, die ein vorher durch ein externes Magnetfeld, z.B. mittels einer stromdurchflossenen Spule oder eines Permanentmagneten, gesättigtes magnetisiertes Teilchen nach Entfernen des äußeren Feldes beibehält.

Mit "kurzzeitigem" ersten oder zweiten Stromimpuls ist eine Impulslänge im Bereich von 5 ms bis 1000 ms, insbesondere im Bereich von 5 ms bis 200 ms und vorzugsweise im Bereich von 10 ms bis 50 ms, gemeint. Aufgrund der relativ langen zeitlichen Abstände zwischen einem Wechsel von der Halteposition in die Freilaufposition und umgekehrt, kann die Impulslänge des ersten oder zweiten Stromimpulses auch im Sekunden- oder Minutenbereich liegen. Allerdings würde eine derart lange Impulslänge zu einer unnötig thermischen Belastung der Spulenanordnung in einem Elektromagneten führen.

Die mechanische Vorspannung kann z.B. mittels eines Federelements, einer Biegefeder oder eines Gummipuffers bewerkstelligt werden. Dabei ist die durch die mechanische Vorspannung bewirkte Rückstellkraft zurück zur Freilaufposition erheblich kleiner als die durch das Remanenzmagnetfeld an der Rotoraußenseite bewirkte Haltekraft.

Mittels des am Elektromagneten verbleibenden "schaltbaren" Remanenzmagnetfelds, ist es vorteilhaft möglich, dass nur für den Umschaltvorgang von der Freilaufposition in die Halteposition und umgekehrt elektrische Energie benötigt wird. Für die überwältigende Zeit zwischen den Umschaltvorgänge wird vorteilhaft nur ein verschwindend geringer Anteil an elektrischer Leistung benötigt.

So wird z.B. für den Fail-Safe-Betrieb eines bekannten Stellantriebs eine elektrische Dauerleistung von 2 Watt benötigt, um den Elektromotor in der Betätigungsstellung entgegen dem Rückstellmoment der Rückstellfeder zu halten. Über das ganze Jahr ergibt sich ein elektrischer Energiebedarf von ca. 17 kWh. Dagegen ist beim erfindungsgemäßen Stellantrieb wegen der nur gelegentlichen Testauslösungen sowie wegen der noch selteneren tatsächlichen Auslösungen in einem Gefahrenfall vorteilhaft ein jährlicher elektrischer Energiebedarf von weniger als 1 kWh erforderlich.

Ein weiterer großer Vorteil ist, dass wegen der typischerweise sehr hohen Getriebeuntersetzung im Bereich von 1:1000 bis 1:10000 und wegen des am Rotor sehr weit außenliegenden Hebels für das Anlegen des Elektromagneten nur eine verhältnismäßig kleine Haftkraft von weniger als 1 N, insbesondere von weniger als 0.1 N, erforderlich ist, um das Stellelement des Stellantriebs in Position zu halten.

Mit "beweglich" sind allgemein Bewegungen des Elektromagneten vorzugsweise mit nur einem (einzigen) Freiheitsgrad gemeint, d.h. in axialer Richtung hin und weg zur axialen Außenseite des Rotors bzw. in radialer Richtung hin und weg zur radialen Außenseite des Rotors. Der Luftspalt kann, wenn ausgebildet, Werte im Bereich von 1 mm bis 5 mm, vorzugsweise im Bereich von 1.5 mm bis 3 mm, annehmen.

Nach einer Ausführungsform ist der Elektromotor auf einer Grundplatte (fest) im Gehäuse des Stellantriebs angeordnet. Der Elektromagnet ist beweglich auf der Grundplatte im Gehäuse angeordnet und weist ein magnetisches Wirkende auf. Der Elektromagnet ist derart auf der Grundplatte ausgerichtet, dass das Wirkende des Elektromagneten in der Freilaufposition einer radialen Außenseite des Rotors unter Ausbildung des Luftspalts gegenüberliegt.

Nach einer zur vorhergehenden Ausführungsform alternativen Ausführungsform ist der Elektromotor auf einer Grundplatte im Gehäuse des Stellantriebs angeordnet. Der Elektromagnet ist beweglich an einer Halterung des Gehäuses angeordnet und weist ein magnetisches Wirkende auf. Der Elektromagnet ist derart an der Halterung ausgerichtet, dass das Wirkende des Elektromagneten in der Freilaufposition einem radialen Außenbereich auf der axialen Außenseite des Rotors unter Ausbildung des Luftspalts gegenüberliegt.

In beiden vorangegangen Ausführungsformen kann der jeweilige Elektromagnet an seinem magnetischen Wirkende vorzugsweise zwei Polschuhe ausbilden, die in der Formgebung zur magnetischen Feldführung in die gegenüberliegende Rotoraußenseite angepasst sind.

Insbesondere ist der Elektromagnet nach einer Ausführungsform mittels eines biegeelastischen Halteelements an der Halterung des Gehäuses oder an der Grundplatte im Gehäuse angeordnet. Im einfachsten Fall ist das biegeelastische Halteelement ein Stanzteil aus einem Federstahl.

Nach einer weiteren Ausführungsform ist der Spulenkern aus einem kornorientierten Elektrostahl hergestellt.

Einer weiteren Ausführungsform zufolge ist der Spulenkern ein weichmagnetischer Spulenkern. Im Spulenkern ist ein Permanentmagnet angeordnet, welcher ein Dauermagnetfeld im Spulenkern aufbaut und welcher bei Einprägen des zweiten kurzzeitigen Stromimpuls in die Spulenanordnung und nach Wiederausbildung des Luftspalts an einem Wirkende des Elektromagneten im Wesentlichen nicht mehr wirksam und somit gelöscht ist.

Dabei wird der Magnetkreis im Elektromagneten durch das Dauermagnetfeld und nach Wegfall des durch die Spulenanordnung aufgebauten Magnetfelds in der Halteposition aufrechterhalten. Nach Einprägen des zweiten Stromimpulses in die Spulenanordnung erfolgt eine Überlagerung des magnetischen "Steuer"-Flusses der Spulenanordnung mit dem magnetischen Dauerfluss des im Spulenkern integrierten Permanentmagneten. In diesem Moment ist das magnetische Wirkende des Elektromagneten im Wesentlichen feldfrei. Der Elektromagnet bewegt sich weg vom "magnetischen Kurzschluss" durch die magnetische Rotoraußenseite bzw. es bewegt sich das erste Ende des Hebelelements weg vom magnetischen Wirkende des Elektromagneten. Mit Zunahme des sich nun ausbildenden Luftspalts erhöht sich auch der magnetische Widerstand am Wirkende des Elektromagneten, bis sich das Dauermagnetfeld im Inneren des Spulenkern einen magnetischen Fluss mit geringerem magnetischen Widerstand bahnt. Nach Wegfall des durch die Spulenanordnung aufgebauten Magnetfelds bleibt der magnetische Fluss des Dauermagnetfelds im Inneren des Spulenkörpers geschlossen. Das magnetische Wirkende des Elektromagnet bleibt weiter im Wesentlichen magnetisch unwirksam.

Nach einer weiteren Ausführungsform umfasst das mit der Außenseite des Rotors in der Halteposition haftende Teil einen Bremsbelag, wobei der Bremsbelag einen Reibungskoeffizienten für die Paarung Bremsbelag-Rotoraußenseite von mindestens 0.5, insbesondere von mindestens 0.8, aufweist. Dadurch erhöht sich die Haftreibung und somit das Haftreibmoment an der Rotoraußenseite erheblich. Der Bremsbelag kann eine dünne Lage aus Gummi, aus Kunststoff oder dergleichen mit einer maximalen Lagendicke im Bereich von 0.1 mm bis 0.5 mm sein.

Nach einer vorteilhaften Ausführungsform weist der Rotor an seiner Außenseite eine im Bezug zu einer Drehachse des Elektromotors tangential umlaufende Verzahnung mit sich abwechselnden Zähnen und Zahnlücken auf. Die Zahnlücken weisen eine tangentiale Zahnlückenabmessung auf. Dabei weist ein mit der Außenseite des Rotors in der Halteposition haftendes Teil eine derartige maximale tangentiale Abmessung auf, dass dieses in der Haltposition mit einer der Zahnlücken der Verzahnung verrastet.

Die radiale Tiefe einer Zahnlücke liegt vorzugsweise im Bereich von 0.3 mm bis 1.5 mm. Dadurch erhöht sich das am Rotor wirkende Haltemoment zusätzlich durch Formschluss. Dadurch, dass der Elektromotor über die Motorsteuerung zunächst abgebremst wird und der Elektromagnet auf den stehenden Rotor "anlegt", liegt faktisch keine Reibbremsung vor. Über die Verzahnung ist zudem die Bremswirkung bei gleicher Magnetkraft viel höher.

Einer Ausführungsform zufolge weist der Stellantrieb eine Steuereinheit zum Empfangen eines Stellsignals und zum entsprechenden Ansteuern des Elektromotors zum Verfahren des Stellelements von einer vorgegebenen ersten Betätigungsstellung zu einer vorgegebenen zweiten Betätigungsstellung auf. Die Steuereinheit ist dazu eingerichtet, die elektrische Schaltungsanordnung zur Ansteuerung des Elektromagneten derart anzusteuern, dass der Elektromagnet vor oder mit dem Ansteuern des Elektromotors zum Verfahren des Stellelements von der ersten Betätigungsstellung zur zweiten Betätigungsstellung von der Halteposition in die Freilaufposition wechselt. Zudem ist die Steuereinheit dazu eingerichtet, die elektrische Schaltungsanordnung derart anzusteuern, dass der Elektromagnet mit oder nach Erreichen der zweiten Betätigungsstellung des Stellanschlusses von der Freilaufposition in die Halteposition wechselt. Die Steuereinheit kann z.B. ein übergeordneter Mikrocontroller des Stellantriebs sein.

Diese Ausführungsform ist besonders vorteilhaft bei nicht-fehlersicheren Stellantrieben. Durch den zeitlichen abgestimmten Wechsel von der Halteposition in die Freigabeposition und wieder zurück ist für das Verfahren des Stellelements kein Rastmomentrad erforderlich.

Einer zur vorhergehenden Ausführungsform alternativen Ausführungsform zufolge weist der Stellantrieb eine Steuereinheit zum Ansteuern des Elektromotors beim Einschalten der Stromversorgung des Stellantriebs oder beim Empfang eines Einschaltsignals zum Verfahren des Stellelements von einer sicheren Ruhestellung zu einer Betätigungsstellung auf. Der Stellantrieb weist eine Rückstellfeder zum Bereitstellen eines auf das Stellelement wirkenden Rückstellmoments zum selbsttätigen Verfahren des Stellelements in die sichere Ruhestellung auf, insbesondere bei Wegfall der Stromversorgung für den Stellantrieb. Das Rückstellmoment bewirkt über das Reduziergetriebe ein Rotorrückstellmoment am Elektromotor. Das mittels des Elektromagneten auf den Rotor in der Halteposition aufgebrachte Haltemoments ist dabei grösser als das auf den Rotor einwirkende Rotorrückstellmoment. Insbesondere ist das Haltemoments mindestens 1.5-mal bis 3-mal so groß wie das Rotorrückstellmoment. Dadurch wird sichergestellt, dass der Stellantrieb zuverlässig in der Betätigungsstellung verbleibt.

Die Steuereinheit ist hierzu eingerichtet, die elektrische Schaltungsanordnung bei Empfang eines Ausschaltsignals derart anzusteuern, dass der Elektromagnet von der Halteposition in die Freilaufposition wechselt, sodass das Stellelement selbsttätig in die sichere Ruhestellung zurückverfährt.

Alternativ kann die elektrische Schaltungsanordnung hierzu eingerichtet sein, dass der Elektromagnet bei Wegfall der Stromversorgung von der Halteposition in die Freilaufposition wechselt, sodass das Stellelement selbsttätig in die sichere Ruhestellung zurückverfährt.

Nach einer weiteren, zu den beiden vorhergehenden Ausführungsformen alternativen Ausführungsform weist der Stellantrieb eine Steuereinheit zum Ansteuern des Elektromotors beim Einschalten der Stromversorgung des Stellantriebs oder beim Empfang eines Einschaltsignals zum Verfahren des Stellelements von einer sicheren Ruhestellung zu einer Betätigungsstellung auf. Der Stellantrieb umfasst eine Rückstellfeder zum Bereitstellen eines auf das Stellelement wirkenden Rückstellmoments zum selbsttätigen Verfahren des Stellelements in die sichere Ruhestellung, insbesondere bei Wegfall der Stromversorgung für den Stellantrieb. Es wirken die am Stellanschluss angeschlossene Klappe oder das am Stellanschluss angeschlossene Ventil, sowie die Rückstellfeder ein Gesamtmoment auf das Stellelement. Das Gesamtmoment bewirkt weiter über das Reduziergetriebe ein Rotorgesamtmoment am Rotor. Dabei ist das mittels des Elektromagneten auf den Rotor des Elektromotors in der Halteposition aufgebrachte Haltemoment größer als das auf den Rotor einwirkende Rotorgesamtmoment, insbesondere mindestens 1.5-mal bis 3-mal so groß. Dadurch wird sichergestellt, dass der Stellantrieb auch unter Berücksichtigung der angeschlossenen Lasten wie Klappen oder Ventile zuverlässig in der Betätigungsstellung verbleibt.

Die Steuereinheit ist wiederum hierzu eingerichtet, die elektrische Schaltungsanordnung bei Empfang eines Ausschaltsignals derart anzusteuern, dass der Elektromagnet von der Halteposition in die Freilaufposition wechselt, sodass das Stellelement selbsttätig in die sichere Ruhestellung zurückverfährt. Alternativ kann die elektrische Schaltungsanordnung wiederum hierzu eingerichtet sein, dass der Elektromagnet bei Wegfall der Stromversorgung von der Halteposition in die Freilaufposition wechselt, sodass das Stellelement selbsttätig in die sichere Ruhestellung zurückverfährt.

Einer weiteren Ausführungsform zufolge weist die elektrische Spulenanordnung der elektrischen Schaltungsanordnung eine elektrische Spule auf, wobei die elektrische Spule in Reihe zu einem Kondensator geschaltet ist. Die Reihenschaltung ist mit einem ersten Ende an ein gemeinsames Bezugspotenzial geschaltet. Ein zweites Ende ist über ein Schaltmittel der elektrischen Schaltungsanordnung (wahlweise) an eine Versorgungsspannung oder an das gemeinsame Bezugspotenzial schaltbar. Das Schaltmittel kann z.B. ein Wechselschalter sein. Es ist der Induktivitätswert der elektrischen Spule und der Kapazitätswert des Kondensators derart bemessen, dass beim Schalten des zweiten Endes der Reihenschaltung an die Versorgungsspannung der erste kurzzeitige Stromimpuls in die elektrische Spule einprägbar ist und dass beim Schalten des zweiten Endes der Reihenschaltung an das gemeinsame Bezugspotenzial der zweite kurzzeitige Stromimpuls mit umgekehrter Stromrichtung in die elektrische Spule einprägbar ist.

Nach einer Ausführungsform ist das Schaltmittel der elektrischen Schaltungsanordnung durch die Steuereinheit des Stellantriebs ansteuerbar, sodass der Elektromagnet von der Halteposition in die Freilaufposition und umgekehrt wechselt.

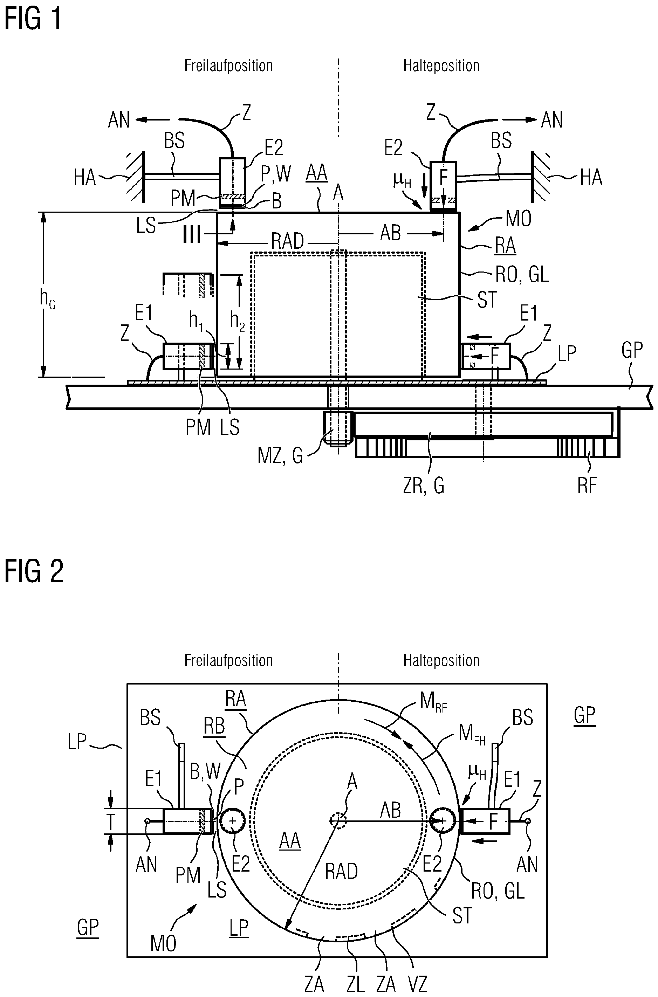

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und die in der Beschreibung erwähnten Merkmale jeweils einzeln für sich oder in beliebiger Kombination erfindungswesentlich sein. Elemente mit gleicher Funktion und Wirkungsweise sind in den Figuren 1 bis 5

jeweils mit denselben Bezugzeichen versehen. Es zeigen schematisch:

FIG 1     eine Schnittdarstellung durch einen beispielhaften Stellantrieb mit einem ersten und zweiten Elektromagneten zur Aufbringung eines kontaktbehafteten Haltemoments über ein Remanenzmagnetfeld gemäß der Erfindung jeweils an einer axialen und alternativ radialen Außenseite des Rotors und jeweils in einer Freilauf- und Haltposition,

FIG 2     das Beispiel gemäß FIG 1 in einer Draufsicht und mit einer Verzahnung an der radialen Außenseite des Rotors gemäß einer Ausführungsform,

FIG 3     eine Draufsicht auf den Elektromagneten gemäß der in FIG 1 eingezeichneten Blickrichtung III,

FIG 4     das Prinzip einer elektrischen Schaltungsordnung zur wahlweise Ansteuerung des Elektromagneten für ein mögliches Aufbringen des Haltemoments mittels eines ersten und zweiten in die Spulenanordnung des Elektromagneten einprägbaren Stromimpulses, und

FIG 5     eine beispielhafte technische Realisierung der elektrischen Schaltungsanordnung gemäß FIG 4 und mit einer Refresh-Funktion gemäß einer Ausführungsform.

FIG 1 zeigt eine Schnittdarstellung durch einen beispielhaften Stellantrieb mit einem ersten und zweiten Elektromagneten E1, E2 zur Aufbringung eines kontaktbehafteten Haltemoments über ein Remanenzmagnetfeld gemäß der Erfindung jeweils an einer axialen und alternativ radialen Außenseite RA, AA des Rotors RO und jeweils in einer Freilauf- und Halteposition.

Der gezeigte Stellantrieb ist für eine Klappe oder für ein Ventil zum Einstellen eines gasförmigen oder flüssigen Volumenstroms vorgesehen. Der Stellantrieb weist weiter einen auf einer gehäusefesten Grundplatte GP angeordneten Elektromotor MO auf. Der Elektromotor ist in einem nicht weiter gezeigten Gehäuse des Stellantriebs aufgenommen. Letzterer umfasst einen auf der Grundplatte GP bzw. einen auf einem Schaltungsträger LP des Stellantriebs fest angeordneten, als Mehrfach-Anker ausgebildeten Stator mit einer Mehrzahl von Ankerspulen auf. Die Ankerspulen des Stators ST werden über eine elektronische Motorsteuerung des Stellantriebs phasengesteuert mit Strom gespeist. Der Schaltungsträger LP ist seinerseits fest auf der Grundplatte GP angeordnet. Koaxial bzw. radial außenliegend zum Stator ST ist ein als Rotorglocke GL bzw. Rotorbecher ausgeführter Rotor RO angeordnet. Der Rotor RO weist typischerweise eine Mehrzahl von Permanentmagneten auf, die sich im Bezug zur Drehachse A in tangentialer Richtung entlang der radialen Innenseite der Rotorglocke GL abwechseln. Die Rotorglocke GL selbst ist aus einem magnetischen Werkstoff, wie z.B. aus Eisen, Nickel oder Ferrit, hergestellt. Der Rotor RO umfasst eine nicht weiter bezeichnete Motorwelle, die beispielhaft durch die im Gehäuse des Stellantriebs angeordnete Grundplatte GP hindurchgeführt ist und in einem Motorzahnrad MZ als Teil eines Reduziergetriebes G des Stellantriebs endet. Das Motorzahnrad MZ ist im kämmenden Eingriff mit einem Zahnrad ZR des Getriebes G.

Das Reduziergetriebe G weist typischerweise noch mehrere hintereinander geschaltete, insbesondere in der Grundplatte GP gelagerte Zahnräder für die gewünschte Untersetzung eines Stellelements des Stellantriebs auf. Das Stellelement kann z.B. ein Zahnsegment sein. Das Stellelement selbst weist einen Stellanschluss zum Anschluss des Stellantriebs an der eingangs genannten Klappe oder an dem eingangs genannten Ventil als Last auf. Je nach Ausgestaltung des Abtriebs ist am Stellanschluss eine vorgebbare Drehbewegung um eine Stellachse des Stellantriebs oder eine vorgebbare lineare Stellbewegung entlang der Stellachse möglich.

Im vorliegenden Beispiel ist das Reduziergetriebe G mit einer Rückstellfeder RF verbunden, welche in einer Betätigungsstellung des Stellantriebs vorgespannt ist und welche bei Ausfall- oder Wegfall der Stromversorgung des Stellantriebs das Stellelement über das Reduziergetriebe G in eine sichere Ruhestellung des Stellantriebs zurückfährt. Ein derartiger Stellantrieb wird als fehlersicherer (fail-safe) Stellantrieb oder auch als Spring-Return-Stellantrieb bezeichnet. Im Beispiel ist die Rückstellfeder RF eine Roll- oder Triebfeder.

Gemäß der Erfindung weist der Stellantrieb einen derart beweglich an einer Außenseite RA, AA des Rotors RO angeordneten Elektromagneten E1, E2 auf, dass dieser in einer Freilaufposition einen Luftspalt LS zur Außenseite RA, AA des Rotors RO ausbildet und in einer Halteposition kontaktbehaftet an der Außenseite RA, AA des Rotors RO anliegt. Mit RAD ist in diesem Zusammenhang der Radius des Rotors RO bzw. der Rotorglocke GL, mit AB der (mittlere) radiale Abstand des in der FIG 1 eingezeichneten oberen zweiten Elektromagneten E2 und mit $h_G$ die (axiale) Bauhöhe der Rotorglocke GL bezeichnet.

Im oberen linken Teil der FIG 1 ist der zweite Elektromagnet E2 über den Luftspalt LS zur axialen Rotoraußenseite RA beabstandet. Der zweite Elektromagnet E2 befindet sich somit in der Freilaufposition und bringt folglich auch kein kontaktbehaftetes Haltemoment auf die axiale Rotoraußenseite RA auf. Der zweite Elektromagnet E2 ist beispielhaft über ein biegeelastisches Bauelement BS, wie z.B. über einen Biegestab, an einer gehäusefesten Halterung HA angebracht und in mechanischer Hinsicht spannungsfrei.

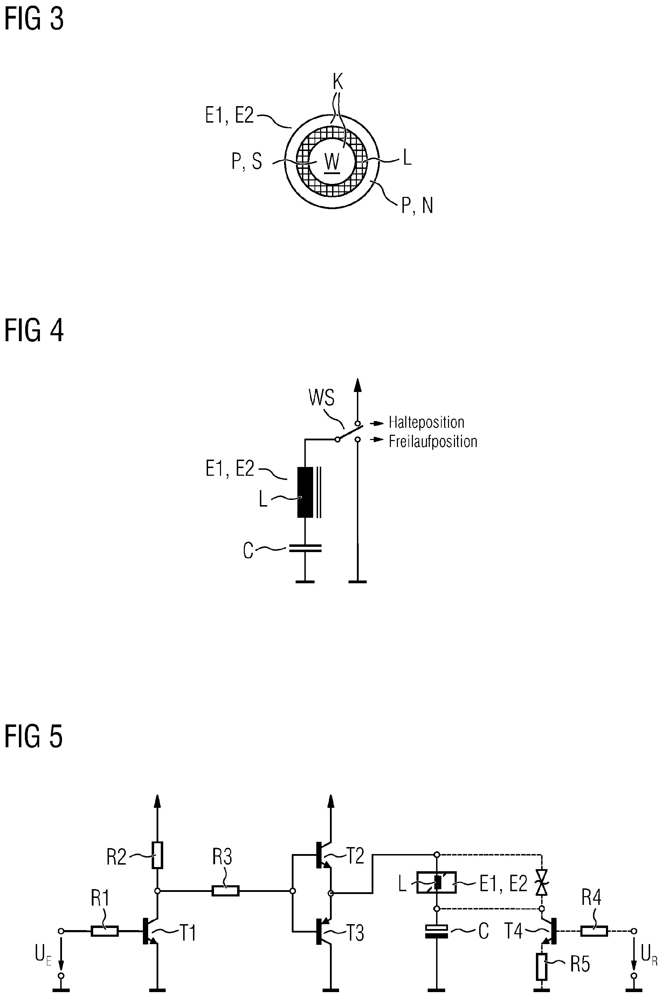

Im Vorgriff auf die FIG 3 bilden die Elektromagnete E1, E2 an ihrem der Rotoraußenseite RA, AA gegenüberliegenden Wirkende W einen, vorzugsweise zwei Polschuhe P aus, an dem sich bei Bestromung des Elektromagneten E1, E2 ein Magnetfeld ausbildet. Im Beispiel der vorliegenden FIG 1 weisen die Elektromagneten E1, E2 bereits auch einen Bremsschuh B am jeweiligen Wirkende W zur Erhöhung des Haltemoments auf. Die jeweiligen Elektromagnete E1, E2 umfassen eine Spulenanordnung L und einen weichmagnetischen Spulenkern K. Zur Bestromung sind die Elektromagneten E1, E2 über eine Zuleitung Z mit einem elektrischen Anschluss AN einer hierzu eingerichteten Schaltungsanordnung zur Ansteuerung des Elektromagneten E1, E2 gemäß der Erfindung verbunden. Im Spulenkern K kann, wie gestrichelt dargestellt, auch ein Permanentmagnet PM angeordnet sein, der ein Dauermagnetfeld im Spulenkern K erzeugt. In diesem Fall ist der Spulenkern K ein weichmagnetischer Spulenkern. Dabei ist das Dauermagnetfeld bei Einprägen des zweiten kurzzeitigen Stromimpuls in die Spulenanordnung L und nach Wiederausbildung des Luftspalts LS am Polschuh P nicht mehr wirksam und somit im Wesentlichen kompensiert.

Im oberen rechten Teil der FIG 1 liegt nun der zweite Elektromagnet E2 direkt an der axialen Rotoraußenseite AA unter Aufbringung einer magnetischen, in axialer Richtung und somit in normaler Richtung zur axialen Rotoraußenseite AA wirkenden Kraft F an. Mit $\mu_H$ ist ein dimensionsloser Reibungskoeffizient bezeichnet, der die vorliegende Materialpaarung aus Werkstoff und Oberflächenbeschaffenheit der axialen Außenseite AA des Rotors RO sowie des direkt anliegenden Bremsschuhs B kennzeichnet. Somit liegt an der axialen Außenseite AA des Rotors RO gemäß der physikalischen Beziehung

$$\text{Reibkraft} = \text{Normalkraft} \cdot \text{Reibungskoeffizient}$$

die Reibkraft $F \cdot \mu_H$ an bzw. über den mittleren radialen Abstand AB zum zweiten Elektromagneten E2 das Haltemoment $M_{FH}$ (siehe FIG 2) als Produkt aus Reibkraft und mittlerem radialen Abstand AB an der axialen Rotoraußenseite AA an.

Im unteren Teil der FIG 1 ist analog zu den beiden oberen Elektromagneten E2 ein erster Elektromagnet E1 gezeigt, der nun radial von der Freilaufposition zur Halteposition hin zu einer radialen Außenseite RA des Rotors RO mittels magnetischer Kraft F bewegbar ist. Im linken unteren Teil der FIG 1 ist der erste Elektromagnet E1 in der Freilaufposition gezeigt. Im rechten unteren Teil der FIG 2 ist der erste Elektromagnet E1 in der Halteposition gezeigt. Mit $h_1$ und $h_2$ sind beispielhaft zwei Bauhöhen für den ersten Elektromagneten E1 gezeigt, wobei das Haltemoment bzw. Haftreibmoment $M_{FH}$ typischerweise umso größer ist, je größer die Bauhöhe $h_1$, $h_2$ des ersten Elektromagnet E1 ist.

In vorliegenden Beispiel befindet sich der elektrische Anschluss zum Anschließen der Zuleitung Z auf dem Schaltungsträger LP, auf dem auch der Stator ST des Elektromotors MO angeordnet ist. Generell ist es für sämtliche Ausführungsformen des erfindungsgemäßen Stellantriebs vorteilhaft, wenn sich zusätzlich auch die elektrische Schaltungsanordnung zur elektrischen Ansteuerung der Elektromagneten E1, E2 auf diesem Schaltungsträger LP befinden. Es können zusätzlich weitere elektrische und elektronische Komponenten auf dem Schaltungsträger LP angeordnet sein, wie z.B. die Motorsteuerung und/oder eine Steuereinheit (Mikrocontroller) des Stellantriebs und/oder eine Stromversorgungseinheit für den Stellantrieb bzw. für die Motorsteuerung.

Gemäß der Erfindung ist für einen Wechsel von der Freilaufposition in die Halteposition mittels der Schaltungsanordnung ein erster kurzzeitiger Stromimpuls in die Spulenanordnung L einprägbar, sodass der Elektromagnet E1, E2 den Luftspalt LS mittels magnetischer Kraft F hin zur Halteposition schließt und durch das im Spulenkern K verbleibende Remanenzmagnetfeld unter Aufbringung eines Haltemoments $M_{FH}$ an der Außenseite AA des Rotors RO haften bleibt.

Weiter gemäß der Erfindung ist für einen Wechsel von der Halteposition in die Freilaufposition mittels der Schaltungsanordnung ein zweiter kurzzeitiger Stromimpuls in die Spulenanordnung L einprägbar, sodass das im Spulenkern K des Elektromagneten E1, E2 vorhandene Remanenzmagnetfeld im Wesentlichen kompensiert wird und sich der Elektromagnet E1, E2 unter Ausbildung des Luftspalts LS weg von der Außenseite RA, AA des Rotors RO hin zur Freilaufposition bewegt und dort verbleibt.

Generell kann nur ein einziger Elektromagnet E1, E2 je Elektromotor MO zur Aufbringung eines Haftreibmoments $M_{FH}$ an der Außenseite RA, AA des Rotors RO vorgesehen sein. Es können auch zwei sich radial gegenüberliegende Elektromagnete E1, E2 je Elektromotor MO zur Aufbringung je eines vorzugsweise gleichgroßen Haftreibmoments $M_{FH}$ an der Außenseite RA, AA des Rotors RO vorgesehen sein. Im letzteren Fall wirkt vorteilhaft kein Biegemoment auf die Motorwelle des Elektromagneten.

FIG 2 zeigt das Beispiel gemäß FIG 1 in einer Draufsicht. In dieser Darstellung ist gut erkennbar, wie das im rechten Teil der Figur vom ersten Elektromagneten E1 an der radialen Rotoraußenseite RA aufgebrachte Haltemoment $M_{FH}$ größer ist als ein von der Rückstellfeder RF über das Reduziergetriebe G am Elektromotor MO bzw. am Rotor RO wirkendes Motorrückstellmoment $M_{RF}$. Dadurch verleibt der Elektromotor MO in der Halteposition. Es ist auch erkennbar, wie der mittels eines biegeelastischen Bauteils BS am Schaltungsträger LP beweglich angeordnete erste Elektromagnet E1 durch magnetische Kraft F hin zur radialen Rotoraußenseite RA bewegt wird und dort verleibt. Das biegeelastische Bauteil BS kann z.B. ein L-förmiges Stanzteil aus Federstahl sein.

In der vorliegenden FIG 2 ist auch eine Verzahnung VZ an der radialen Außenseite RA des Rotors RO gemäß einer Ausführungsform der Erfindung gezeigt. Die im Bezug der Drehachse A des Elektromotors MO tangential umlaufende Verzahnung VZ weist sich abwechselnde Zähne ZA und Zahnlücken ZL auf. Die Zahnlücken ZL weisen eine tangentiale Zahnlückenabmessung auf. Es weist ein an der Außenseite RA des Rotors RO in der Halteposition haftendes Teil P, wie hier der Polschuh P des ersten Elektromagneten E1, eine derartige maximale tangentiale Abmessung T auf, dass dieses Teil P in der Haltposition mit einer der Zahnlücken ZL der Verzahnung VZ verrastet bzw. im Eingriff ist. Dadurch erhöht sich das am Rotor RO wirkende Haltemoment $M_{FH}$ zusätzlich durch Formschluss. Die radiale Tiefe einer Zahnlücke ZL liegt vorzugsweise im Bereich von 0.3 mm bis 1.5 mm.

FIG 3 zeigt eine Draufsicht auf einen Elektromagneten E1, E2 gemäß der in FIG 1 eingezeichneten Blickrichtung III. Im vorliegenden Beispiel weist der Elektromagnet E1, E2 einen magnetischen topfförmigen Spulenkern K auf, in der eine zylindrische Topf-(Spule) L eingelegt ist. Je nach Stromrichtung des durch die Spule L fließenden Erregerstroms bilden sich zwei gegensätzliche Magnetpole N, S an beiden Polschuhen P aus. Im vorliegenden Beispiel bildet sich ein radial außenliegender magnetischer Nordpol N am radial äußeren Polschuh P und ein radial innenliegender magnetischer Südpol S am inneren Polschuh P aus.

FIG 4 zeigt das Prinzip einer elektrischen Schaltungsordnung zur wahlweise Ansteuerung des Elektromagneten E1, E2 für ein mögliches Aufbringen des Haltemoments $M_{FH}$ mittels eines ersten und zweiten in die Spulenanordnung (Spule) L des Elektromagneten E1, E2 einprägbaren kurzzeitigen Stromimpulses. Die Schaltungsanordnung umfasst eine Reihenschaltung aus der Spule L des Elektromagneten E1, E2 und aus einem Kondensator C sowie einen Wechselschalter WS. Das eine Ende der Reihenschaltung sowie ein Schaltkontakt des Wechselschalters WS für die Freilaufposition ist jeweils mit der Masse als gemeinsames Bezugspotenzial verbunden. Ist der gezeigte Wechselschalter WS in der mit Halteposition gekennzeichneten Schaltposition geschaltet, so wird der Kondensator C über ein über den Schaltkontakt für die Halteposition anliegendes Versorgungsspannungspotenzial und über die in Reihe geschaltete Spule L bis zur Sättigung des Kondensators C aufgeladen. Es stellt sich somit ein kurzzeitiger Stromimpuls durch die Spule L ein, die durch die Zeitkonstante aus der Induktivität der Spule L und der Kapazität des Kondensators C festgelegt ist. Durch die Spule L fließt somit ein zunächst zunehmender und dann wieder abnehmender Stromimpuls unter Ausbildung eines entsprechenden Magnetfelds. Generell liegt die Pulslänge des Stromimpulses in einem Bereich von 5 ms bis 1000 ms, insbesondere in einem Bereich von 5 ms bis 200 ms und vorzugsweise im Bereich von 10 ms bis 50 ms. Wird der Wechselschalter WS von der Halteposition in die Freilaufposition geschaltet, so entlädt sich der Kondensator C über die Spule L mit umgekehrter Stromrichtung und unter Ausbildung eines entsprechenden Magnetfelds mit umgekehrtem magnetischem Vorzeichen.

FIG 5 zeigt eine beispielhafte technische Realisierung der elektrischen Schaltungsanordnung gemäß FIG 4 und mit einer Refresh-Funktion gemäß einer Ausführungsform. Liegt eine positive Schaltspannung $U_E$ zur Einstellung der Halteposition des Elektromagneten E1, E2 an, so schaltet die aus den beiden Transistoren T2, T3 gebildete Gegentaktstufe die positive Versorgungsspannung an die Reihenschaltung aus der Spule L des Elektromagneten E1, E2 und aus dem Kondensator C. Der Widerstand R1, der Transistor T1 sowie die beiden Widerstände R2, R3 fungieren hier als Inverter. Solange die Schaltspannung $U_E$ an der Schaltungsanordnung anliegt, wird der Kondensator C bis zur seiner Sättigung aufgeladen. Der Elektromagnet E1, E2 wird dabei durch das sich gleichfalls impulsförmig ausbildende Magnetfeld durch magnetische Kraft F hin zur Rotoraußenseite RA, AA bewegt. Nach dem Aufladen befindet sich die gezeigte Schaltungsanordnung vorteilhaft im stationären Stromsparmodus. Der Elektromagnet E1, E2 bleibt dann wegen des Remanenzmagnetfelds an der Rotoraußenseite RA, AA und somit in der Halteposition haften. Sinkt die positive Schaltspannung $U_E$ gegen den Wert 0V, so schaltet die Gegentaktstufe die Spule L an das gemeinsame Bezugspotenzial (Masse). Der Kondensator C wird auf umgekehrtem Wege unter Ausbildung eines entgegengesetzten Magnetfelds in der Spule L entladen. Das Remanenzmagnetfeld wird dadurch kompensiert, und der Elektromagnet E1, E2 bewegt sich weg von der Rotoraußenseite RA, AA zurück in die Freilaufposition.

Im rechten Teil der FIG 5 sind ein weiterer Transistor T4 sowie zwei weitere Widerstände R4, R5 zu sehen, welche zur Durchführung einer Refresh- bzw. Auffrisch-Funktion gemäß einer Ausführungsform der Erfindung vorgesehen sind. Bei Anliegen einer positiven Schaltspannung $U_R$ für den Refresh des Elektromagneten E1, E2 wird der Kondensator C entladen und der Elektromagnet E1, E2 zur Aufrechterhaltung des Remanenzmagnetfelds "aufgefrischt". Die Auffrischung kann z.B. einmal pro Tag oder mehrmals pro Woche erfolgen, um ein unzulässiges Abschwächen des Remanenzmagnetfelds über die Zeit zu verhindern. Die Ansteuerung des weiteren Transistors T4 kann z.B. durch die Schaltungsanordnung selbst oder durch eine übergeordnete Steuereinheit des Stellantriebs erfolgen. Die Ansteuerung kann durch Anlegen eines wiederum kurzzeitigen Spannungsimpulses $U_R$ insbesondere im Bereich von 5 ms bis 200 ms erfolgen. Bei dem oberhalb des Transistors T4 gezeigten Bauelements handelt es sich um eine optionale Suppressordiode, welche gegebenenfalls unzulässig hohe Spannungen von der Spule L begrenzt.

Bezugszeichenliste

| | |
|---|---|
| A | Drehachse, Motorachse |
| AA | axiale Außenseite |
| AB | radialer Abstand |
| AN | elektrischer Anschluss |
| B | Bremsbelag |
| BS | Biegestab, biegeelastisches Bauteil, Balken |
| C | Kondensator, Elektrolytkondensator |
| D | Hebeldrehachse, Drehpunkt |
| E1, E2 | Elektromagnet, Remanenzmagnet |
| F | Kraft, magnetische Kraft, Anzugkraft |
| G | Getriebe |
| GL | Rotorglocke |
| GP | Grundplatte, Gehäuseteil |
| $h_1$, $h_2$ | Bauteilhöhe der Elektromagneten |
| HA | Halterung |
| $h_G$ | Höhe des Rotors, Höhe der Rotorglocke |
| K | Spulenkern |
| LP | Schaltungsträger, Leiterplatte |
| L | Spulenanordnung, Spule |
| LS | Luftspalt |
| $M_{FH}$ | Haltemoment, Haftreibmoment |
| MO | Motor, Elektromotor |
| $M_{RF}$ | Motorrückstellmoment |
| MZ | Motorzahnrad, Motorritzel |
| N | Nordpol |
| P | Polschuh |
| PM | Permanentmagnet |
| R1-R5 | ohmsche Widerstände |
| RA | radiale Außenseite des Rotors |
| RAD | Radius der Rotorglocke |
| RB | radialer Außenbereich des axialen Außenseite |
| RF | Rückstellfeder |
| RO | Rotor, Rotorglocke, Rotorbecher |
| S | Südpol |
| ST | Stator |
| T | tangentiale Abmessung |
| T1-T4 | Transistoren, elektronische Schaltelemente |
| $U_E$ | Schaltspannung für Haltebetrieb des Elektromagneten |
| $U_R$ | Schaltspannung für Refresh des Elektromagneten |
| VZ | Verzahnung |
| W | Wirkende |
| WS | Wechselschalter |
| Z | Zuleitung, Anschlusskabel, Leiterbahnfolie |
| ZA | Zahn |
| ZL | Zahnlücke |
| ZR | Zahnrad |
| $\mu_H$ | Reibungskoeffizient |
| S | Südpol |
| ST | Stator |
| T | tangentiale Abmessung |
| T1-T4 | Transistoren, elektronische Schaltelemente |
| $U_E$ | Schaltspannung für Haltebetrieb des Elektromagneten |
| $U_R$ | Schaltspannung für Refresh des Elektromagneten |
| VZ | Verzahnung |
| W | Wirkende |
| WS | Wechselschalter |
| WW | magnetischer Werkstoff |
| Z | Zuleitung, Anschlusskabel, Leiterbahnfolie |

ZA      Zahn
ZF      Zugfeder, Federelement
ZL      Zahnlücke
ZR      Zahnrad
$\mu_H$      Reibungskoeffizient

**Patentansprüche**

1. Stellantrieb für eine Klappe oder für ein Ventil zum Einstellen eines gasförmigen oder flüssigen Volumenstroms, wobei der Stellantrieb ein Gehäuse, einen darin aufgenommenen Elektromotor (MO), ein nachgeschaltetes Reduziergetriebe (G) und als Abtrieb ein Stellelement mit einem Stellanschluss für die Klappe oder das Ventil aufweist, wobei der Elektromotor (MO) einen Stator (ST) und einen zu einer Drehachse (A) des Elektromotors (MO) umlaufenden Rotor (RO) aufweist,
**dadurch gekennzeichnet,**

- **dass** der Rotor (RO) ein koaxial zur Drehachse (A) des Elektromotors (MO) außenliegender Rotor (RO) ist,
- **dass** der Stellantrieb einen angrenzend zu einer Außenseite (RA, AA) des Rotors (RO) angeordneten Elektromagneten (E1, E2) aufweist, wobei dieser (E1, E2) eine Spulenanordnung (L) mit einem magnetischen Spulenkern (K) umfasst,
- **dass** der Stellantrieb eine elektrische Schaltungsanordnung zur Ansteuerung des Elektromagneten (E1, E2) aufweist,
- **dass** mittels der Schaltungsanordnung ein erster kurzzeitiger Stromimpuls in die Spulenanordnung (L) einprägbar ist, sodass nachfolgend ein Remanenzmagnetfeld im Spulenkern (K) verbleibt, um in einer Halteposition des Stellantriebs unter Aufbau einer mechanischen Vorspannung ein kontaktbehaftetes Haltemoment ($M_{FH}$) auf die Außenseite (RA, AA) des Rotors (RO) aufzubringen,
- **dass** mittels der Schaltungsanordnung ein zweiter kurzzeitiger Stromimpuls in die Spulenanordnung (L) einprägbar ist, um nachfolgend das im Spulenkern (K) noch vorhandene Remanenzmagnetfeld zum Lösen des kontaktbehafteten Haltemoments ($M_{FH}$) unter Ausbildung eines Luftspalts (LS) zwischen dem Elektromagneten (E1, E2) und der Außenseite (RA, AA) des Rotors (RO) im Wesentlichen zu löschen,
- **dass** der Elektromagnet (E1, E2) derart beweglich angrenzend zur Außenseite (RA, AA) des Rotors (RO) angeordnet ist, dass der Elektromagnet (E1, E2) unter Aufbau der mechanischen Vorspannung in der Halteposition zur Aufbringung des Haltemoments ($M_{FH}$) an der Rotoraußenseite anliegt,
- **dass** der erste kurzzeitige Stromimpuls derart in die Spulenanordnung (L) einprägbar ist, dass der Elektromagnet (E1, E2) den Luftspalt (LS) mittels magnetischer Kraft (F) hin zur Halteposition schließt und durch das im Spulenkern (K) verbleibende Remanenzmagnetfeld unter Aufbringung des Haltemoments ($M_{FH}$) an der Außenseite (RA, AA) des Rotors (RO) magnetisch haften bleibt, und
- **dass** der zweite kurzzeitige Stromimpuls derart in die Spulenanordnung (L) einprägbar ist, dass das im Spulenkern (K) noch vorhandene Remanenzmagnetfeld im Wesentlichen gelöscht wird, wobei sich der Elektromagnet (E1, E2) selbsttätig unter Ausbildung des Luftspalts (LS) weg von der Rotoraußenseite hin zur Freilaufposition bewegt und dort verbleibt.

2. Stellantrieb nach Anspruch 1, wobei der Elektromotor (MO) auf einer Grundplatte (GP) im Gehäuse des Stellantriebs angeordnet ist, wobei der Elektromagnet (E1) beweglich auf der Grundplatte (GP) im Gehäuse angeordnet ist und ein magnetisches Wirkende (W) aufweist, wobei der Elektromagnet (E1) derart auf der Grundplatte (GP) ausgerichtet ist, dass das Wirkende (W) des Elektromagneten (E1) in der Freilaufposition einer radialen Außenseite (RA) des Rotors (RO) unter Ausbildung des Luftspalts (LS) gegenüberliegt.

3. Stellantrieb nach Anspruch 2, wobei der Elektromagnet (E1) mittels eines biegeelastischen Halteelements (BS) zum Aufbau der mechanischen Vorspannung an der Halterung (HA) des Gehäuses oder an der Grundplatte (GP) im Gehäuse angeordnet ist.

4. Stellantrieb nach einem der vorherigen Ansprüche, wobei der Spulenkern (K) ein weichmagnetischer Spulenkern (K) ist, wobei im Spulenkern (K) ein Permanentmagnet (PM) angeordnet ist, welcher ein Dauermagnetfeld im Spulenkern (K) erzeugt, wobei das Dauermagnetfeld bei Einprägen des zweiten kurzzeitigen Stromimpulses in die Spulenanordnung (L) und nach Wiederausbildung des Luftspalts (LS) an einem Wirkende (W) des Elektromagneten (E1, E2) im Wesentlichen nicht mehr wirksam und somit gelöscht ist.

5. Stellantrieb nach einem der vorherigen Ansprüche, wobei ein an der Außenseite (RA, AA) des Rotors (RO) in der Halteposition haftendes Teil (E1, E2) einen Bremsbelag (B) umfasst, wobei der Bremsbelag (B) einen Reibungskoeffizienten ($\mu_H$) für die Paarung Bremsbelag-Rotoraußenseite von mindestens 0.5, insbesondere von mindestens 0.8, aufweist.

6. Stellantrieb nach einem der vorherigen Ansprüche, wobei der Rotor (RO) an seiner Außenseite (RA, AA) eine im Bezug zu einer Drehachse (A) des Elektromotors (MO) tangential umlaufende Verzahnung (VZ) mit sich abwechselnden Zähnen (ZA) und Zahnlücken (ZL) aufweist, wobei die Zahnlücken (ZL) eine tangentiale Zahnlückenabmessung aufweisen und wobei ein mit der Außenseite (RA, AA) des Rotors (RO) in der Halteposition haftendes Teil (E1, E2, B) eine maximale tangentiale Abmessung (T) aufweist, sodass dieses in der Halteposition mit einer der Zahnlücken (ZL) der Verzahnung (VZ) verrastet.

7. Stellantrieb nach einem der Ansprüche 1 bis 6,

   - wobei der Stellantrieb eine Steuereinheit zum Empfangen eines Stellsignals und zum entsprechenden Ansteuern des Elektromotors (MO) zum Verfahren des Stellelements von einer vorgegebenen ersten Betätigungsstellung zu einer vorgegebenen zweiten Betätigungsstellung aufweist,
   - wobei die Steuereinheit dazu eingerichtet, die elektrische Schaltungsanordnung zur Ansteuerung des Elektromagneten (E1, E2) derart anzusteuern, dass der Elektromagnet (E1, E2) vor oder mit dem Ansteuern des Elektromotors (MO) zum Verfahren des Stellelements von der ersten Betätigungsstellung zur zweiten Betätigungsstellung von der Halteposition in die Freilaufposition wechselt, und
   - wobei die Steuereinheit dazu eingerichtet, die elektrische Schaltungsanordnung derart anzusteuern, dass der Elektromagnet (E1, E2) mit oder nach dem Erreichen der zweiten Betätigungsstellung des Stellelements von der Freilaufposition in die Halteposition wechselt.

8. Stellantrieb nach einem der Ansprüche 1 bis 6,

   - wobei der Stellantrieb eine Steuereinheit zum Ansteuern des Elektromotors (MO) beim Einschalten der Stromversorgung des Stellantriebs oder beim Empfang eines Einschaltsignals zum Verfahren des Stellelements von einer sicheren Ruhestellung zu einer Betätigungsstellung aufweist,
   - wobei der Stellantrieb eine Rückstellfeder (RF) zum Bereitstellen eines auf das Stellelement wirkenden Rückstellmoments zum selbsttätigen Verfahren des Stellelements in die sichere Ruhestellung aufweist, insbesondere bei Wegfall der Stromversorgung für den Stellantrieb, wobei das Rückstellmoment über das Reduziergetriebe (G) ein Rotorrückstellmoment ($M_{FR}$) am Elektromotor (MO) bewirkt,
   - wobei das mittels des Elektromagneten (E1, E2) auf den Rotor (RO) in der Halteposition aufgebrachte Haltemoment ($M_{FH}$) größer ist als das auf den Rotor (RO) einwirkende Rotorrückstellmoment ($M_{FR}$), insbesondere mindestens 1.5-mal bis 3-mal so groß, und
   - wobei die Steuereinheit dazu eingerichtet ist, die elektrische Schaltungsanordnung bei Empfang eines Ausschaltsignals derart anzusteuern, dass der Elektromagnet (E1, E2) von der Halteposition in die Freilaufposition wechselt, sodass das Stellelement selbsttätig in die sichere Ruhestellung zurückverfährt, oder
   - wobei die elektrische Schaltungsanordnung derart eingerichtet ist, dass der Elektromagnet (E1, E2) bei Wegfall der Stromversorgung von der Halteposition in die Freilaufposition wechselt, sodass das Stellelement selbsttätig in die sichere Ruhestellung zurückverfährt.

9. Stellantrieb nach einem der Ansprüche 1 bis 6,

   - wobei der Stellantrieb eine Steuereinheit zum Ansteuern des Elektromotors (MO) beim Einschalten der Stromversorgung des Stellantriebs oder beim Empfang eines Einschaltsignals zum Verfahren des Stellelements von einer sicheren Ruhestellung zu einer Betätigungsstellung aufweist,
   - wobei der Stellantrieb eine Rückstellfeder (RF) zum Bereitstellen eines auf das Stellelement wirkenden Rückstellmoments zum selbsttätigen Verfahren des Stellelements in die sichere Ruhestellung aufweist, insbesondere bei Wegfall der Stromversorgung für den Stellantrieb,
   - wobei die am Stellanschluss angeschlossene Klappe oder das am Stellanschluss angeschlossene Ventil, sowie die Rückstellfeder (RF) ein Gesamtmoment auf das Stellelement bewirken, wobei das Gesamtmoment über das Reduziergetriebe (G) ein Rotorgesamtmoment am Rotor (RO) bewirkt,
   - wobei das mittels des Elektromagneten (E1, E2) auf den Rotor (RO) des Elektromotors (MO) in der Halteposition aufgebrachte Haltemoment ($M_{FH}$) größer ist als das auf den Rotor (RO) einwirkende Rotorgesamtmoment, insbesondere mindestens 1.5-mal bis 3-mal so groß, und
   - wobei die Steuereinheit dazu eingerichtet ist, die elektrische Schaltungsanordnung bei Empfang eines Ausschaltsignals derart anzusteuern, dass der Elektromagnet (E1, E2) von der Halteposition in die Freilaufposition wechselt, sodass das Stellelement selbsttätig in die sichere Ruhestellung zurückverfährt, oder
- wobei die elektrische Schaltungsanordnung derart eingerichtet ist, dass der Elektromagnet (E1, E2) bei Wegfall der Stromversorgung von der Halteposition in die Freilaufposition wechselt, sodass das Stellelement selbsttätig in die sichere Ruhestellung zurückverfährt.

10. Stellantrieb nach einem der vorherigen Ansprüche, wobei die Spulenanordnung der elektrischen Schaltungsanordnung eine elektrische Spule (L) aufweist, wobei die elektrische Spule (L) in Reihe zu einem Kondensator (C) geschaltet ist, wobei die Reihenschaltung mit einem ersten Ende an ein gemeinsames Bezugspotenzial geschaltet, wobei ein zweites Ende über ein Schaltmittel (WS) der elektrischen Schaltungsanordnung an eine Versorgungsspannung oder an das gemeinsame Bezugspotenzial schaltbar ist, wobei der Induktivitätswert der elektrischen Spule (L) und der Kapazitätswert des Kondensators (C) derart bemessen sind, dass beim Schalten des zweiten Endes der Reihenschaltung an die Versorgungsspannung der erste kurzzeitige Stromimpuls in die elektrische Spule (L) einprägbar ist und dass beim Schalten des zweiten Endes der Reihenschaltung an das gemeinsame Bezugspotenzial der zweite kurzzeitige Stromimpuls mit umgekehrter Stromrichtung in die elektrische Spule (L) einprägbar ist.

**Claims**

1. Actuator for a flap or for a valve for adjusting a gaseous or fluid volume flow, wherein the actuator has a housing, an electric motor (MO) accommodated therein, a downstream reduction gear (G) and, as a take-off, a actuating element with an actuator connection for the flap or the valve, wherein the electric motor (MO) has a stator (ST) and a rotor (RO) circumferential to an axis of rotation (A) of the electric motor (MO),
   **characterised in that**,

   - the rotor (RO) is a rotor (RO) lying coaxially outside in relation to the axis of rotation (A) of the electric motor (MO),
   - the actuator has an electromagnet (E1, E2) arranged adjacent to an outer side (RA, AA) of the rotor (RO), wherein this (E1, E2) comprises a coil arrangement (L) with a magnetic coil core (K),
   - the actuator has an electrical circuit arrangement for activation of the electromagnet (E1, E2),
   - by means of the circuit arrangement a first brief current pulse is able to be injected into the coil arrangement (L), so that subsequently a remanent magnetic field remains in the coil core (K), in order, in a holding position of the actuator, while a mechanical pre-tensioning is set up, to apply a holding torque with contact ($M_{FH}$) to the outer side (RA, AA) of the rotor (RO), and
   - by means of the circuit arrangement a second brief current pulse is able to be injected into the coil arrangement (L), in order subsequently essentially to extinguish the remanent magnetic field still present in the coil core (K) for releasing the holding torque ($M_{FH}$) with contact, while an air gap (LS) between the electromagnet (E1, E2) and the outer side (RA, AA) of the rotor (RO) is formed,
   - the electromagnet (E1, E2) is arranged movably adjacent to the outer side (RA, AA) of the rotor (RO) in such a way that the electromagnet (E1, E2), while the mechanical pretensioning in the holding position for applying the holding torque ($M_{FH}$) is formed, rests against the outer side of the rotor,
   - the first brief current pulse is able to be injected into the coil arrangement (L) in such a way that the electromagnet (E1, E2) closes the air gap (LS) by means of magnetic force (F) towards the holding position and, through the remanent magnetic field remaining in the coil core (K), while the holding torque ($M_{FH}$) to the outer side (RA, AA) of the rotor (RO) is formed, sticks magnetically, and
   - the second brief current pulse is able to be injected into the coil arrangement (L) in such a way that that a remanent magnetic field still present in the coil core (K) is essentially extinguished, wherein the electromagnet (E1, E2) moves away automatically, while the air gap (LS) is formed, from the outer side of the rotor towards the free running position and remains there.

2. Actuator according to claim 1, wherein the electric motor (MO) is arranged on a base plate (GP) in the housing of the actuator, wherein the electromagnet (E1) is arranged movably on the base plate (GP) in the housing and has a magnetic working end (W), wherein the electromagnet (E1) is aligned in such a way on the base plate (GP) that the working end (W) of the electromagnet (E1), in the free running position, lies against a radial outer side (RA) of the rotor (RO) while the air gap (LS) is formed.

3. Actuator according to claim 2, wherein the electromagnet (E1) is arranged by means of an elastic holding element (BS) for setting up the mechanical pretensioning on the bracket (HA) of the housing or on the base plate (GP) in the housing.

4. Actuator according to one of the preceding claims, wherein the coil core (K) is a soft magnetic coil core (K), wherein a permanent magnet (PM), which creates a permanent magnetic field in the coil core (K), is arranged in the coil core (K), wherein the permanent magnetic field, on injection of the second brief current pulse into the coil arrangement (L) and after re-establishment of the air gap (LS) to a working end (W) of the electromagnet (E1, E2), is essentially no longer effective and is thus extinguished.

5. Actuator according to one of the preceding claims, wherein a part (E1, E2) adhering to the outer side (RA, AA) of the rotor (RO) in the holding position comprises a brake coating (B), wherein the brake coating (B) has a coefficient of friction ($\mu_H$) for the pairing of brake coating and outer side of the rotor of at least 0.5, in particular of at least 0.8.

6. Actuator according to one of the preceding claims, wherein the rotor (RO), on its outer side (RA, AA), has toothing (VZ) running around it tangentially with regard to an axis of rotation (A) of the electric motor (MO) with alternating teeth (ZA) and tooth gaps (ZL), wherein the tooth gaps (ZL) have a tangential tooth gap dimension and wherein a part (E1, E2, B) adhering to the outer side (RA, AA) of the rotor (RO) in the holding position, has a maximum tangential dimension (T), so that this latches in the holding position with one of the tooth gaps (ZL) of the toothing (VZ).

7. Actuator according to one of claims 1 to 6,

   - wherein the actuator has a control unit for receiving a control signal and for corresponding activation of the electric motor (MO) for moving the actuating element from a predetermined first actuation position to a predetermined second actuation position,
   - wherein the control unit is configured to activate the electrical circuit arrangement for activating the electromagnet (E1, E2) in such a way that the electromagnet (E1, E2), before or with the activation of the electric motor (MO) for moving the actuating element from the first actuation position to the second actuation position, switches from the holding position into the free running position, and
   - wherein the control unit is configured to activate the electrical circuit arrangement in such a way that the electromagnet (E1, E2), as or after it reaches the second actuation position of the actuating element, switches from the free running position into the holding position.

8. Actuator according to one of claims 1 to 6,

   - wherein the actuator has a control unit for activation of the electric motor (MO) when the power supply of the actuator is switched on or when a switch-on signal to drive the actuating element from a safe idle position to an actuation position is received,
   - wherein the actuator has a return spring (RF) for providing a return torque acting on the actuating element for automatically moving the actuating element into the safe idle position, in particular when the power supply for the actuator is lost, wherein the return element brings about a rotor return torque ($M_{FR}$) at the electric motor (MO) via the reduction gear (G),
   - wherein the holding torque ($M_{FH}$) applied by means of the electromagnet (E1, E2) to the rotor (RO) in the holding position is greater that the rotor return torque ($M_{FR}$) acting on the rotor (RO), in particular at least 1.5 times to 3 times as great, and
   - wherein the control unit is configured to activate the electrical circuit arrangement on receipt of a switch-off signal in such a way that the electromagnet (E1, E2) switches from the holding position into the free running position, so that the actuating element is moved back automatically into the safe idle position, or
   - wherein the electrical circuit arrangement is configured in such a way that, when the power supply is lost, the electromagnet (E1, E2) switches from the holding position into free running position, so that the actuating element is moved back automatically into the safe idle position.

9. Actuator according to one of claims 1 to 6,

   - wherein the actuator has a control unit for activation of the electric motor (MO) when the power supply of the actuator is switched on or when a switch-on signal for moving the actuating element from a safe idle position to an actuation position is received,
   - wherein the actuator has a return spring (RF) for providing a return torque acting on the actuating element for automatically moving the actuating element into the safe idle position, in particular when the power supply for the actuator is lost,
   - wherein the flap connected to the actuator connection, or the valve connected to the actuator connection as well as the return spring (RF) exert an overall torque on the actuating element, wherein the overall torque brings about an overall rotor torque at the rotor (RO) via the reduction gear (G),
- wherein the holding torque ($M_{FH}$) applied by means of the electromagnet (E1, E2) to the rotor (RO) of the electric motor (MO) in the holding position is greater than the overall rotor torque acting on the rotor (RO), in particular at least 1.5 times to 3 times as great, and
- wherein the control unit is configured to activate the electrical circuit arrangement on receipt of a switch-off signal in such a way that the electromagnet (E1, E2) switches from the holding position into the free running position, so that the actuating element is moved back automatically into the safe idle position, or
- wherein the electrical circuit arrangement is configured in such a way that the electromagnet (E1, E2) switches from the holding position into the free running position when the power supply is lost, so that the actuating element is moved back automatically into the safe idle position.

10. Actuator according to one of the preceding claims, wherein the coil arrangement of the electrical circuit arrangement has an electrical coil (L), wherein the electrical coil (L) is connected in series with a capacitor (C), wherein the series circuit is connected by a first end to a common reverence potential, wherein a second end is able to be switched via a switching means (WS) of the electrical circuit arrangement to a supply voltage or to the common reference potential, wherein the inductance value of the electrical coil (L) and the capacitance value of the capacitor (C) are dimensioned in such a way that, when the second end of the series circuit is switched to the supply voltage, the first brief current pulse is able to be injected into the electrical coil (L) and, when the second end of the series circuit is switched to the common reference potential, the second brief current pulse is able to be injected into the electrical coil (L) with the reversed current direction.

**Revendications**

1. Servomoteur pour un clapet ou pour une vanne pour l'ajustement d'un débit volumique gazeux ou liquide, le servomoteur comprenant un carter, un moteur électrique (MO) logé dans celui-ci, un engrenage démultiplicateur (G) en aval et, en tant que sortie, un élément de réglage avec un raccordement de réglage pour le clapet ou la vanne, dans lequel le moteur électrique (MO) comprend un stator (ST) et un rotor (RO) tournant par rapport à un axe de rotation (A) du moteur électrique (MO),
   **caractérisé en ce que**

   - le rotor (RO) est un rotor (RO) situé à l'extérieur de manière coaxiale par rapport à l'axe de rotation (A) du moteur électrique (MO),
   - le servomoteur comprend un électroaimant (E1, E2) disposé de manière adjacente à un côté externe (RA, AA) du rotor (RO), dans lequel celui-ci (E1, E2) comporte un ensemble bobine (L) avec un noyau de bobine magnétique (K),
   - le servomoteur comprend un ensemble circuit électrique pour l'excitation de l'électroaimant (E1, E2),
   - au moyen de l'ensemble circuit, une première impulsion de courant de courte durée peut être injectée dans l'ensemble bobine (L), de sorte que, par la suite, un champ magnétique rémanent demeure dans le noyau de bobine (K) afin d'appliquer, dans une position de maintien du servomoteur lors de l'établissement d'une précontrainte mécanique, un couple de maintien ($M_{FH}$) avec contact sur le côté externe (RA, AA) du rotor (RO),
   - au moyen de l'ensemble circuit, une deuxième impulsion de courant de courte durée peut être injectée dans l'ensemble bobine (L) afin de supprimer essentiellement par la suite le champ magnétique rémanent encore présent dans le noyau de bobine (K) pour la libération du couple de maintien ($M_{FH}$) avec contact lors de la constitution d'un entrefer (LS) entre l'électroaimant (E1, E2) et le côté externe (RA, AA) du rotor (RO),
   - l'électroaimant (E1, E2) est disposé mobile de manière adjacente au côté externe (RA, AA) du rotor (RO) de telle sorte que l'électroaimant (E1, E2), lors de l'établissement de la précontrainte mécanique, repose dans la position de maintien pour l'application du couple de maintien ($M_{FH}$) sur le côté externe de rotor,
   - la première impulsion de courant de courte durée peut être injectée dans l'ensemble bobine (L) de telle sorte que l'électroaimant (E1, E2) ferme l'entrefer (LS) au moyen d'une force magnétique (F) jusqu'à la position de maintien et, par le biais du champ magnétique rémanent demeurant dans le noyau de bobine (K), lors de l'application du couple de maintien ($M_{FH}$) sur le côté externe (RA, AA) du rotor (RO), reste magnétiquement adhésif, et
   - la deuxième impulsion de courant de courte durée peut être injectée dans l'ensemble bobine (L) de telle sorte que le champ magnétique rémanent encore présent dans le noyau de bobine (K) soit essentiellement supprimé, dans lequel l'électroaimant (E1, E2), lors de la constitution de l'entrefer (LS), s'écarte automatiquement du côté externe de rotor jusqu'à la position de roue libre et y demeure.

2. Servomoteur selon la revendication 1, dans lequel le moteur électrique (MO) est disposé sur une plaque de base (GP) dans le carter du servomoteur, dans lequel l'électroaimant (E1) est disposé mobile sur la plaque de base (GP) dans le carter et comprend une extrémité active (W) magnétique, dans lequel l'électroaimant (E1) est orienté sur la plaque de base (GP) de telle sorte que l'extrémité active (W) de l'électroaimant (E1), dans la position de roue libre, fasse face à un côté externe radial (RA) du rotor (RO) lors de la constitution de l'entrefer (LS).

3. Servomoteur selon la revendication 2, dans lequel l'électroaimant (E1) est disposé dans le carter au moyen d'un élément de maintien (BS) élastique en flexion pour l'établissement de la précontrainte mécanique au niveau du support (HA) du carter ou au niveau de la plaque de base (GP).

4. Servomoteur selon l'une des revendications précédentes, dans lequel le noyau de bobine (K) est un noyau de bobine (K) magnétique doux, dans lequel est disposé dans le noyau de bobine (K) un aimant permanent (PM), lequel crée un champ magnétique permanent dans le noyau de bobine (K), dans lequel le champ magnétique permanent, lors de l'injection de la deuxième impulsion de courant de courte durée dans l'ensemble bobine (L) et après la reconstitution de l'entrefer (LS) au niveau d'une extrémité active (W) de l'électroaimant (E1, E2), n'est essentiellement plus actif et est par conséquent supprimé.

5. Servomoteur selon l'une des revendications précédentes, dans lequel une partie (E1, E2) adhérant au côté externe (RA, AA) du rotor (RO) dans la position de maintien comporte une plaquette de frein (B), dans lequel la plaquette de frein (B) présente un coefficient de frottement ($\mu_H$) pour l'appariement plaquette de frein-côté externe de rotor d'au moins 0,5, en particulier d'au moins 0,8.

6. Servomoteur selon l'une des revendications précédentes, dans lequel le rotor (RO) comprend au niveau de son côté externe (RA, AA) une denture (VZ) tournant tangentiellement par rapport à un axe de rotation (A) du moteur électrique (MO) avec des dents (ZA) et des entre-dents (ZL) alternés, dans lequel les entre-dents (ZL) présentent une dimension d'entre-dent tangentielle et dans lequel une partie (E1, E2, B) adhérant au côté externe (RA, AA) du rotor (RO) dans la position de maintien présente une dimension tangentielle (T) maximale, de sorte que celle-ci s'encliquette dans la position de maintien avec l'un des entre-dents (ZL) de la denture (VZ).

7. Servomoteur selon l'une des revendications 1 à 6,

- le servomoteur comprenant une unité de commande pour la réception d'un signal de réglage et pour l'excitation correspondante du moteur électrique (MO) pour le passage de l'élément de réglage d'une première position d'actionnement prédéfinie à une deuxième position d'actionnement prédéfinie,
- dans lequel l'unité de commande est conçue pour exciter l'ensemble circuit électrique pour l'excitation de l'électroaimant (E1, E2) de telle sorte que l'électroaimant (E1, E2), avant ou pendant l'excitation du moteur électrique (MO), pour le passage de l'élément de réglage de la première position d'actionnement à la deuxième position d'actionnement, passe de la position de maintien à la position de roue libre, et
- dans lequel l'unité de commande est conçue pour exciter l'ensemble circuit électrique de telle sorte que l'électroaimant (E1, E2), pendant ou après l'atteinte de la deuxième position d'actionnement de l'élément de réglage, passe de la position de roue libre à la position de maintien.

8. Servomoteur selon l'une des revendications 1 à 6,

- le servomoteur comprenant une unité de commande pour l'excitation du moteur électrique (MO) lors de la mise sous tension de l'alimentation en courant du servomoteur ou lors de la réception d'un signal de mise sous tension pour le passage de l'élément de réglage d'une position de repos sûre à une position d'actionnement,
- le servomoteur comprenant un ressort de rappel (RF) pour la fourniture d'un couple de rappel agissant sur l'élément de réglage pour le passage automatique de l'élément de réglage dans la position de repos sûre, en particulier lors de la disparition de l'alimentation en courant pour le servomoteur, dans lequel le couple de rappel, par l'intermédiaire de l'engrenage démultiplicateur (G), engendre un couple de rappel de rotor ($M_{FR}$) au niveau du moteur électrique (MO),
- dans lequel le couple de maintien ($M_{FH}$) appliqué au moyen de l'électroaimant (El, E2) sur le rotor (RO) dans la position de maintien est supérieur au couple de rappel de rotor ($M_{FR}$) agissant sur le rotor (RO), en particulier d'au moins 1,5 fois à 3 fois supérieur, et
- dans lequel l'unité de commande est conçue pour exciter l'ensemble circuit électrique lors de la réception d'un signal de mise hors tension de telle sorte que l'électroaimant (E1, E2) passe de la position de maintien à la position de roue libre, de sorte que l'élément de réglage est ramené automatiquement dans la position de repos sûre, ou
- dans lequel l'ensemble circuit électrique est conçu de telle sorte que l'électroaimant (E1, E2), lors de la disparition de l'alimentation en courant, passe de la position de maintien à la position de roue libre, de sorte que l'élément de réglage est ramené automatiquement dans la position de repos sûre.

9. Servomoteur selon l'une des revendications 1 à 6,

- le servomoteur comprenant une unité de commande pour l'excitation du moteur électrique (MO) lors de la mise sous tension de l'alimentation en courant du servomoteur ou lors de la réception d'un signal de mise sous tension pour le passage de l'élément de réglage d'une position de repos sûre à une position d'actionnement,
- le servomoteur comprenant un ressort de rappel (RF) pour la fourniture d'un couple de rappel agissant sur l'élément de réglage pour le passage automatique de l'élément de réglage dans la position de repos sûre, en particulier lors de la disparition de l'alimentation en courant pour le servomoteur,
- dans lequel le clapet raccordé au raccordement de réglage ou la vanne raccordée au raccordement de réglage, ainsi que le ressort de rappel (RF), engendrent un couple total sur l'élément de réglage, dans lequel le couple total, par l'intermédiaire de l'engrenage démultiplicateur (G), engendre un couple total de rotor au niveau du rotor (RO),
- dans lequel le couple de maintien ($M_{FH}$) appliqué au moyen de l'électroaimant (EI, E2) sur le rotor (RO) du moteur électrique (MO) dans la position de maintien est supérieur au couple total de rotor agissant sur le rotor (RO), en particulier d'au moins 1,5 fois à 3 fois supérieur, et
- dans lequel l'unité de commande est conçue pour exciter l'ensemble circuit électrique lors de la réception d'un signal de mise hors tension de telle sorte que l'électroaimant (E1, E2) passe de la position de maintien à la position de roue libre, de sorte que l'élément de réglage est ramené automatiquement dans la position de repos sûre, ou
- dans lequel l'ensemble circuit électrique est conçu de telle sorte que l'électroaimant (E1, E2), lors de la disparition de l'alimentation en courant, passe de la position de maintien à la position de roue libre, de sorte que l'élément de réglage est ramené automatiquement dans la position de repos sûre.

10. Servomoteur selon l'une des revendications précédentes, dans lequel l'ensemble bobine de l'ensemble circuit électrique comprend une bobine électrique (L), dans lequel la bobine électrique (L) est branchée en série à un condensateur (C), dans lequel le branchement en série est commuté à une première extrémité à un potentiel de référence commun, dans lequel une deuxième extrémité est commutable par l'intermédiaire d'un moyen de commutation (WS) de l'ensemble circuit électrique à une tension d'alimentation ou au potentiel de référence commun, dans lequel la valeur d'inductance de la bobine électrique (L) et la valeur de capacité du condensateur (C) sont mesurées de telle sorte que, lors de la commutation de la deuxième extrémité du branchement en série à la tension d'alimentation, la première impulsion de courant de courte durée puisse être injectée dans la bobine électrique (L) et que, lors de la commutation de la deuxième extrémité du branchement en série au potentiel de référence commun, la deuxième impulsion de courant de courte durée avec un sens de courant inversé puisse être injectée dans la bobine électrique (L).

# FIG 1

# FIG 2

FIG 3

FIG 4

FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1258969 A1
- US 3423661 A
- EP 1655259 A1
- EP 1642858 A2
- DE 1538927 A1
- US 20200224742 A1
- US 10454341 B1
- DE 19832694 A1
- DE 1290244 B
- DE 102018210167 A1